# EUROPEAN PATENT SPECIFICATION

(11) **EP 1 680 476 B1**
(45) Date of publication and mention of the grant of the patent: **18.06.2014**
(21) Application number: 03818506.2
(22) Date of filing: 06.09.2003
(51) Int. Cl.: C09K 3/18

(54) **DE-ICING, ANTI-FREEZING AND ANTI-CORROSION COMPOSITIONS**
ENTEISUNGSMITTEL, GEFRIERSCHUTZMITTEL UND KORROSIONSSCHUTZMITTEL
COMPOSITIONS DE DEGIVRAGE, ANTIGEL ET ANTICORROSION

(43) Date of publication of application: 19.07.2006
(73) Proprietor: Safecote Limited, Cheshire CW8 4DU (GB)
(72) Inventor: HIGGIN-BOTHAM, John c/o Safecote Limited, Cheshire CW8 4DU (GB); GRIMSHAW, Vincent c/o Safecote Limited, Cheshire CW8 4DU (GB); FISHER, Leonard c/o Safecote Limited, Cheshire CW8 4DU (GB)
(74) Representative: Earnshaw, Geoffrey Mark
(86) International application number: PCT/GB2003/003890
(87) International publication number: WO 2005/023956

(56) References cited:
- EP-A- 1 279 714
- WO-A-00/50531
- WO-A-01/07532
- WO-A-02/26910
- WO-A-03/057794
- US-A- 6 149 834
- US-B1- 6 440 325
- US-B1- 6 596 188
- VAVRINECZ G: "II. AVERAGE COMPOSITION AND MOLASSES PRODUCTION INDICES" SUGAR TECHNOLOGY REVIEWS, vol. 6, no. 2-3, 1979, pages 131-146, XP008028657

## Description

The present invention relates to compositions for the prevention or remediation of surfaces or objects upon which snow and/or ice has or could accumulate, particularly but not exclusively anti-freezing and de-icing compositions, which compositions also have enhanced anti-corrosive properties.

Many compounds are known as being helpful in removing snow and ice from surfaces, such as road ways or aggregate stockpiles of sand, gravel and coal, or to prevent ice and snow from forming on such surfaces. These include the common types of chloride salts, such as calcium, magnesium, or sodium. One common substance is sodium chloride or salt. This, as rocksalt or evaporated salt, is a cheap and plentiful material, giving a cost effective manner for preventing the accumulation of snow and ice, or of de-icing surfaces upon which snow or ice has accumulated. However, there are several well-recognised limitations or detrimental effects resulting from the use of chloride salts.

One significant limitation is that chloride salts are effective only at temperatures just below freezing. In the depths of winter, many countries climates frequently experience temperatures much lower than -5°C for long periods of time. Additionally, sodium chloride has long been recognised as being harmful to the environment, as well as being highly corrosive, e.g. to the underbodies of vehicles, reinforced concrete. structures and road hardware, electrical systems, and subterranean utility services and the like.

International Patent Application No WO 00/50531A1 discusses the use of compositions in this field using "desugared sugar beet molasses". Certain other examples are given for the combination of this material with chemical salts.

European Patent Application No 1279714A2 also describes compositions for use in the same field, generally covering de-icing compositions comprising at least 20% by weight of desugared molasses and a second de-icing component. The desugared molasses could come either from sugar beet or sugar cane.

The above two Patent documents show the use of a current co-product of sugar production. However, further investigation has shown that the benefits of the use of some form of molasses can be more broadly defined, and indeed the benefits of the use of other cereal co-products recognised, based on a deeper understanding of the composition and nature of these substances.

Thus, according to one aspect of the present invention, there is provided a composition for the prevention, reduction and/or remediation of the formation or accumulation of ice and/or snow on a surface or on an object, the composition being in accordance with claim 1.

The generality of the present invention provides a number of benefits not previously recognised. Firstly, the invention recognises the use of low molecular weight carbohydrates being the key to the de-icing effect, rather than a particular number or type of molasses products. Thus, the de-icing effect can be provided by a range of materials such as those also from cereals, starch and carbohydrate syrup production, and from the co-products from the subsequent processing or fermentation of cereal starch, sugar and other carbohydrate co-products.

The compositions of the present invention have the content by weight listed in Table 1:

**Table 1**

| Component | | Content |
|---|---|---|
| Moisture | | 35-50% |
| Monosaccharides | | 2-10% |
| Disaccharides | | 1-15% |
| Other Carbohydrates and Polysaccharides | | 1-10% |
| Amino acid carbohydrates complexes | | 1-10% |
| Amino acids | | 1-5% |
| Other Nitrogenous compounds | | 10-20% |
| Organic acids | | 1-10% |
| Total Mineral salts | | 5-25% |
| Including: | Potasssium | 2-10% |
| | Calcium | 1=5% |
| | Sodium | 0.1-0.5% |
| | Magnesium | 0.1-3.0% |
| | Chloride | 0.1-3.0% |
| | Sulphate | 1-5% |

All measurements are approximate and are expressed on a fresh weight basis.

Some physical characteristics.
- Specific Gravity 1.2-1.35
- pH 5-8
- Viscosity 200-800cps at -30°C

The carbohydrates in the compositions of the present invention are preferably one or more of a co-product of the refining of sugar beet or sugar cane, or from starch or carbohydrate syrup production, or from co-products from the subsequent processing or fermentation of starch, sugar or other carbohydrate co-products.

The carbohydrates and other organic compounds (and naturally included soluble mineral salts) in the compositions are preferably based on a composition that has the total soluble solids content in the range 45-80%, preferably 50-70%, more preferably 55-65%, or even 60-62%.

Preferably, the compositions of the present invention are admixed with 2-95% by weight or volume of one or more minerals, in particular natural mineral salts. Suitable mineral salts in solid form or in solution include chemical anti-freezing or de-icing agents generally known in the art, such as those based on sodium, calcium, magnesium and potassium, generally the acetate, chloride, carbonate and formate salts, as well as glycols such as ethylene glycol and di-ethylene glycol. "Rock salt" is a commonly used de-icing material, but others well known in the art are calcium and magnesium chloride.

Preferred compositions of the present invention generally have:

| | |
|---|---|
| Total sugars as Invert (TSAI) | min 12% |
| Total mineral salts | min 25% |
| Total Chloride | max 2% |
| Total organic matter | min 10% |

It is known that sugar and cereal co-products from different countries, and indeed from different production facilities in the same country, vary considerably in their composition and properties.

The present invention recognises that different sugar, cereal and molasses products will provide different quantities and qualities of its components, most especially its carbohydrate and mineral ion content.

Secondly, the present invention recognises that the de-icing ability of molasses and similar by- or co-products can be better viewed as the type and degree of carbohydrates and soluble mineral salts provided thereby. Thus, the present invention is also based on the recognitionthat local molasses and other co-products, some of a variable and seasonal nature, provide a certain amount of carbohydrates and other components, which known amounts should then be used to suit the de-icing blend desired in that territory or country, and to ensure consistency and quality of the blend.

Thus according to another aspect of the present invention, there is provided a method of formulating and blending a composition for the prevention, reduction and/or remediation of the formation or accumulation of ice and/or snow on a surface or on an object having 5-50% by weight of one or more low molecular weight carbohydrates, wherein two or more co-products of cereal, starch, syrup, sugar and /or carbohydrate production are provided, and a proportion of each co-product is selected to provide the composition.

The present invention recognises that 'blends' of co-products mentioned above have not previously been suggested or tried. Blending knowledge in for example the sugar production industry allows the co-products to be so made, or so mixed, so as to provide the desired blend, eg carbohydrate and any soluble mineral salt content, that is desired.

Preferably, the composition blended is as defined in Table 1. This can be achieved using iterative calculation formulation software.

In particular, the present invention is based on recognition that the use of carbohydrates, being non-ionic, along with a non-chloride mineral content, can inhibit and reduce the chloride corrosion of metals, for a number of reasons. Firstly, by reducing the chloride ion concentration. Secondly, by reducing the conductivity of solutions. Thirdly, by chemical complexation of chloride ions by mineral salt cations, and fourthly, by entrapment of the chloride ions themselves. Furthermore, because most simple low molecular weight carbohydrates are reducing agents, they slowly deplete the dissolved oxygen concentration and hence they inhibit the oxidative rusting and corrosion of metals.

Thus the present invention extends to the anticorrosive ability of the compositions of the present invention, and the anti-corrosive effect by their use.

The present invention has also'recognised that the number of dissociated ions or molecules and solution also affects the colligative properties, most relevantly the lowering of the freezing point.

Indeed, the high solubility of low molecular weight sugars and certain mineral chloride and non-chloride salts, combine to strongly influence the colligative properties of water and solutions. In particular, these properties are freezing point depression, boiling point elevation, vapour pressure lowering, and the increasing of osmotic pressure. These properties are primarily the result of the increased concentration of dissolved solute particles (i.e. the sugars and salts), or the number of chemical moles of the solute, not the type or identity of the solute.

Sugars can only provide "one" undissociated ion. However, salts such as sodium and potassium chloride have two, and calcium and magnesium salts have up to three.

Compositions of the present invention that can have up to three ions in solution are more effective in lowering the freezing point. For example, rock salt has a maximum practical solubility of about 25% in cold water, whereas embodiments of the present invention can have up to 80% total soluble solids composed of one or two or three ions. Thus, embodiments of the present invention are more effective in lowering the freezing point (and hence in the melting of snow and ice) than rock salt alone.

Thus, according to another aspect of the present invention, there is provided a composition for the prevention reduction and/or remediation of the formation or accumulation of ice and/or snow on a surface or on an object, wherein the composition includes a mineral substance having 2 or 3 or more dissociated ions capable of lowering the freezing point of the ice and/or snow.

It is nevertheless still recognised that rock salt still a useful material, It is an inexpensive and easily obtained material whose application is also very useful as a component of compositions of the present invention.

The compositions of the present invention can further include water.

The compositions of the present invention exclude the specific ranges or compositions found in WO 00/50531A1 or EP1279714A2.

The present invention includes the possibility of the combination of a composition of the present invention with one or more anti-skid agents such as sand, gravel, cinders, limestone aggregate, fly ash, river rock and mixtures thereof, in particular sand.

According to another aspect of the present invention, there is provided a process for the preparation of a combination of one or more carbohydrates and one or more minerals as defined above, wherein the components are admixed together.

According to another aspect of the present invention, there is provided a method of preventing, reducing and/or remediating the formation and/or accumulation of ice and/or snow/on a surface or an object, comprising applying to said surface or object a composition as hereinbefore defined.

The surface or object upon which the composition could be spread includes any type of travelling surface for a vehicle or person or machine, including roads, highways, train tracks, runways, walkways, paths, etc, and any relevant object such as a car, track, train, aeroplane, etc. The present invention extends to use on stockpiles of aggregate materials such as rock salt, sand, rocks, stones, coal, etc.

Embodiments of the present invention will now be described by way of example only.

By way of background, sugar is manufactured all over the world, generally from sugar cane or sugar beet. Both types of primary vegetation result in the production of molasses, cane molasses and beet molasses. This is treated world wide as a commodity, much of it coming into Europe from India and Pakistan. Cane sugar molasses is much more readily available as a traded commodity. The general total of molasses production worldwide is about 45 million tonnes per year, about 37 million tonnes from cane and 8 million from beet.

Similarly cereal products such as corn steep liquor, wheat syrups from glucose production, vinasse from alcohol and yeast production, pot ale syrup from whisky production, whey from cheese production, soya milk, potato starch, and condensed molasses solubles from amino acid production.

Therefore sourcing local product is desired to optimise the formulation and to minimise transportation costs.

Meanwhile, de-icing substances are generally provided in two forms. One variation is rock salt or another crystalline sodium chloride source, which is applied in a dry form. This product is then transported in trucks, and deposited directly therefrom onto highway surfaces. The other variation is often termed "pre-wet". In this variation, a substance such as brine is kept in saddle tanks on a vehicle, and added to salt at the rotating distributor prior to spreading on the highway surface.

### Examples

Table 2 hereinafter defines a molasses composition of the present invention by analysis, and hereinafter termed "Safecote".'

All measurements are approximate and expressed 'as is', i.e. on a fresh weight basis.

**Table 2**

| Component | | Content |
|---|---|---|
| Moisture | | 39% |
| Monosaccharides | | 5% |
| Disaccharides | | 7% |
| Other Carbohydrates and Polysaccharides | | 4% |
| Amino acid carbohydrates complexes | | 5% |
| Amino acids | | 3% |
| Other Nitrogenous compounds | | 13% |
| Organic acids | | 3% |
| Total Mineral salts | | 20% |
| Including: | Potasssium | 6% |
| | Calcium | 4% |
| | Sodium | 0.5% |
| | Magnesium | 0.3% |
| | Chloride | 1.4% |
| | Sulphate | 3% |

Some physical characteristics:
- Specific Gravity 1.32
- pH 6-7
- Freezing Point <-30°C
- Viscosity ~400cps at -30°C
- Colour Dark brown
- Odour Mild, non-pungent

### Table 3

The following table compares the dilution effect on freezing point, in degrees Centigrade, of a 23% sodium chloride solution with and without 50% Safecote additive.

**Table 3**

| %Original Strength | 0% | 25% | 50% | 60% | 70% | 80% | 90% | 100% |
|---|---|---|---|---|---|---|---|---|
| 23% NaCl brine + Safecote | 0 | -8.4 | -15.3 | -18.5 | -21.3 | -25.1 | -29.1 | -34. |
| 23% NaCl brine | 0 | -3.6 | -7.8 | -10.2 | -11.9 | -14.5 | -16.9 | -20.7 |

Safecote can be added to liquid chloride at a rate of 50% by volume.

For anti-icing or de-icing, it is preferable to apply it on a surface by using a multiple stream pipe distributor.

For anti-icing use 70 to 100 litres of liquid chloride/Safecote mixture per lane mile (45 to 65 litres per lane kilometre) could be used, dependent on local conditions.

### 1. STUDY

A study was carried out in relation to British Standards to investigate the effect of de-icer substances as an additive or pre-wetting agent for salt products. As a pre-wetting agent to salt, the primary aims are to reduce the chloride component of the treatment to inhibit the damaging corrosive effects of salt and to reduce the level of damage that occurs to both concrete and carbon steel and aluminium when chloride-based de-icers are used for winter maintenance.

The study was carried out in two phases.

### Phase 1

- Freeze/thaw damage to concrete
- Skid resistance and binder stripping of asphalt • surfacings
- Corrosion of steel and aluminium coupons Environmental impact

### Phase 2 -

- Freezing Point Temperature (FPT) depression.
- Environmental assessment - highway runoff and bleaching.
- Skid resistance of asphalt surfacings.
- Application and spreading characteristics.
- Ice melt, ice penetration and ice undercutting.

The following summarises the findings from the two Phases of the study.

### 2. De-icing Formulations

In general the following five formulations were evaluated but, not all the formulations were considered in every phase.
a. S1 - Safecote added as a pre-wetting agent/admixture to solid rock salt (NaCl). 33.3litres of Safecote to 1000kg of rock salt.
b. S2 - Safecote added as a pre-wetting agent/admixture to rock salt (NaCl). 22.2 litres of Safecote to 1000kg of rock salt.
c. C32 - A Safecote/calcium chloride de-icing liquid.
   A 32% solution of calcium chloride (CaCl₂) (by weight) added to Safecote in a 1:1 ratio (by volume).
d. M30 - A Safecote/magnesium chloride (MgCl₂) de-icing liquid.
   A 30% solution of magnesium chloride (by weight) added to Safecote in a 1:1 ratio (by volume).
e. Safecote - The undiluted product.

Also compared were the effects of various other de-icers which included rock salt, urea, potassium. acetate, ethylene glycol, pre-wetted salt (rock salt with a calcium chloride pre-wetting agent) and magnesium chloride.

### 3 Summary of results

### 3.1 Freeze/Thaw Damage to Concrete

The effect of the M30 and C32 formulations on the level of freeze/thaw damage to concrete mixes was assessed and compared to the effect of rock salt. The tests were carried out on two types of Pavement Quality Concrete (PQC), one for use on highways and one for use at airports using the test method given in prEN 1338 (BSI, 1993).

After a 28-day period of 24-hour freeze/thaw cycles using five per cent solutions of the various de-icers, the specimens were assessed visually and by collection of Loose material from the concrete test surface. The Safecote based formulations cause no Visual damage to either of the concrete mixes whereas damage was caused by rock salt. Loose material was collected from the surface of the majority of the specimens, but in the case of M30 and C32 it did not appear to be concrete.

### 3.2 Skid Resistance and Binder Stripping of Asphalt Surfacings

In Phase 1, the effect on the skid resistance of asphalt surfacing materials was investigated using a Portable Skid Resistance Tester. Two different materials were used - a fine-textured and an open-textured asphalt surfacing, and the effects of the de-icers were evaluated for a range of concentrations.

At all the concentrations tested, the S1 formulation had no detrimental effect on the Skid Resistance Value (SRV) but the undiluted C32 and M30 formulations reduced the SRV. As a consequence, their use may not be suitable as a precautionary de-icer on surfaces close to the minimum permitted skid resistance. Their use might be acceptable where immediate dilution of the product can be expected (i.e. when used on snow and ice already present on the road surface) or on surfaces with an SRV well above the minimum permitted skid resistance.

In Phase 2, skid resistance tests were carried out using the S2 formulation. The effective skid resistance of the S2 formulation was compared to rock salt on the same test surface using a TRL SCRIM machine (British Standards Institution, 1999). S2 formulation and salt (grade 6.3mm) were applied with a typical spreader at rates of log/m² and 20g/m².

Under dry conditions, consistently high values were obtained for the S2 formulation and for rock salt at both spread rates. The S1 and S2 formulations showed no detrimental effect on the skid resistance of the road surfaces tested.

Tests in Phase 1 were undertaken to investigate, whether or not the S1 formulation would lead to binder stripping of the aggregate in asphalt surfacing materials.

The method employed was as given in MoD Specification 040, Appendix B (Defence Estate Organization, 1998). There was no evidence of binder stripping for the aggregate/binder combination tested.

### 3.3 Corrosion of Steel and Aluminium Coupons

The effect of a range of Safecote and non Safecote-based de-icing formulations on the corrosion of steel and aluminium coupons was investigated using a modified version of the neutral salt spray test as given in BS 7479 (BSI, 1991).
Under the test conditions employed, the M30 Safecote-based de-icing formulation caused (72%) less corrosion on mild steel samples than rock salt, the lowest of all the other de-icing chemicals that were tested.

The C32 formulation was marginally less effective than M30, but was still less corrosive than the remainder.

The S1 formulation only caused 55 per cent of the corrosion of carbon steel seen with rock salt and was approximately comparable with potassium acetate and urea. As a further comparison, pre-wetted salt caused 127 per cent of the corrosion seen with rock salt alone.

In the case of the aluminium samples, Safecote caused significantly (i.e. 90%) less corrosion than the rock salt. It did cause slightly more corrosion than potassium acetate, but the difference was minimal. Pre-wetted salt was not tested on aluminium samples.

### 3.4 Freezing Point Temperature (FPT) Depression

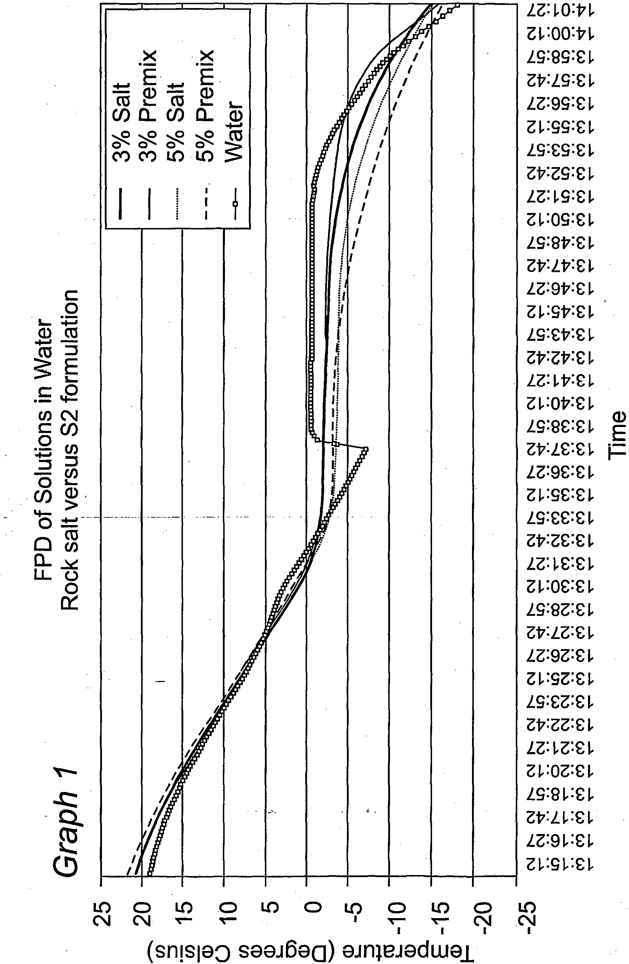

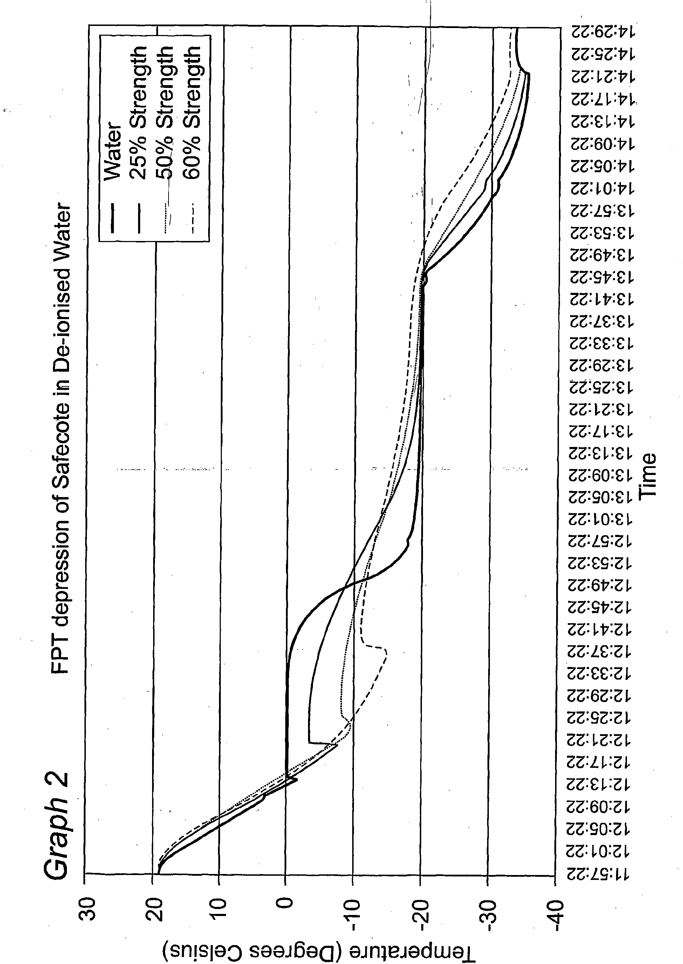

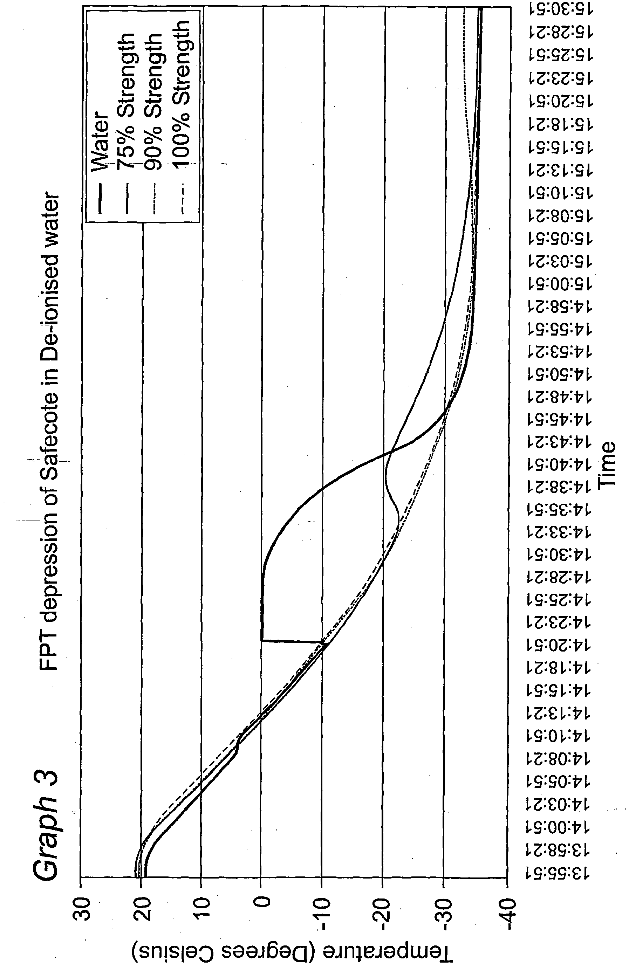

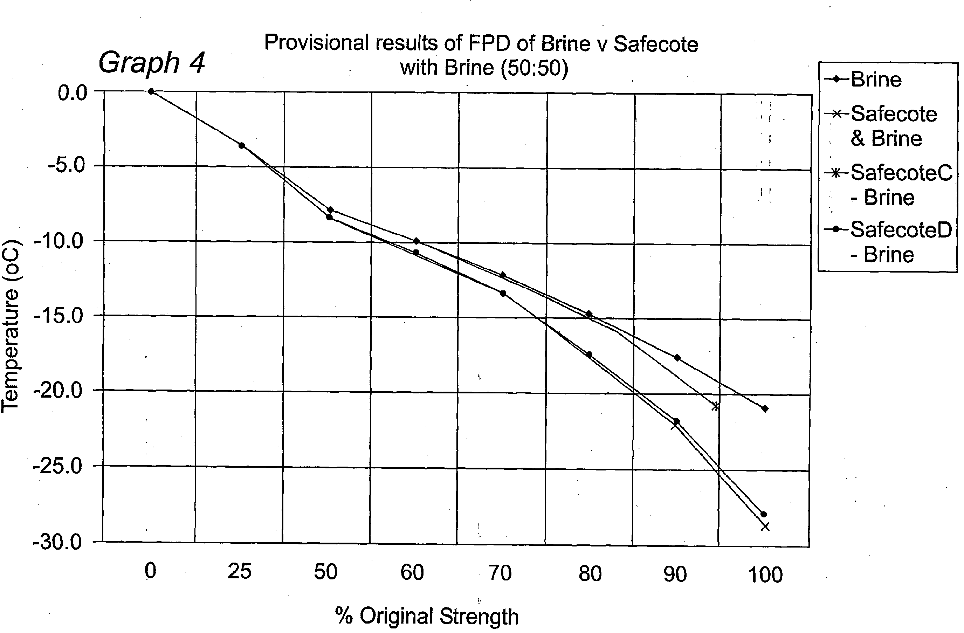

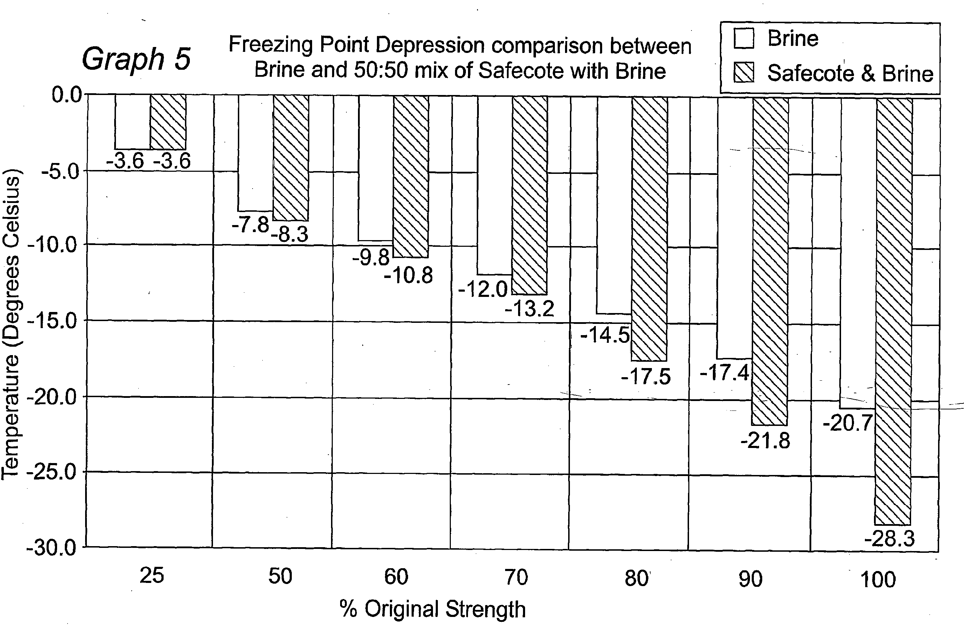

Tests were undertaken in a climate chamber to determine the FPT depression of the S2 formulation as a de-icer. The S2 formulation was compared with solutions of rock salt, a 23.3 per-cent saturated solution of brine, undiluted Safecote, and Safecote with brine. De-ionised water was used as a control. The test data were transformed into graphs of cooling curves shown in graphs 1-5 herewith.

At other points on the curves, the data were extrapolated.to obtain the FPTs.

The results showed that for 3 per cent and 5 per cent solutions of the S2 formulation, FPTs were as good as or better than rock salt alone as shown in Table 4.

**Table 4**

| | Freezing Point Temperature (°C) | | | | |
|---|---|---|---|---|---|
| % Strength | Rock salt | Safecote Premix (S2) | Neat Safecote | Brine (23.3% NaCl) | Safecote with Brine |
| 3 | -2.1 | -2.1 | -0.5 | | |
| 5 | -3.0 | -3.0 | | | |
| 25 | | | -3.4 | -3.6 | -3.6 |
| 50 | | | -8.0 | -7.8 | -8.3 |
| 60 | | | -10.0 | -9.8 | -10.8 |
| 70 | | | -15.0 | -12.0 | -13.2 |
| 75 | | | -19.0 | | |
| 80 | | | -24.0 | -14.5 | -17.5 |
| 90 | | | -33.8 | -17.4 | -21.8 |
| 100 | | | <-35.0 | -21.2 | -28.3 |

### 3.5 Environmental Impact

Based on the chemical analysis of the Safecote product an assessment of the environmental effects of using Safecote-based de-icers was carried out.

Safecote is primarily intended for use in conjunction with rock salt or other de-icers for highway and other vehicular surface applications. Therefore, to determine the overall environmental effect of using a Safecote-based de-icer, further evaluation was carried out in Phase 2.

### 3.5.1 Highway runoff

Guidelines from the UK Design Manual for Roads and Bridges (UK Department of Transport, 1998) suggest a basic methodology for calculating dilution factors and subsequent contribution as a concentration to the downstream watercourse. Calculations were made for two theoretical scenarios - A and B, for a stream along a 1km length of carriageway comprising four lanes with no camber. Scenario A had high dilution, a high runoff rate and rapid discharge into watercourses and Scenario B had low dilution, less precipitation and a smaller runoff rate.
The S2 formulation complied with the UK Water Quality Standard and the current UK.
Environment Agency Standards for highway runoff for heavy metals and other chemicals.

The results showed that, as an additive to rock salt, Safecote is likely to be far less damaging to the environment than rock salt alone. Safecote may be best suited to highway de-icing when used at a recommended application ratio of 3 per cent weight for weight to rock salt.

### 3.5.2 Leaching

The trials confirmed that the addition of Safecote to salt was not a leachate problem at highway depots that are adhering to environmental standards for storage facilities and proper management of stockpiles.

### 3.6 Application and Spreading Characteristics

Spreading trials were carried out to compare the performance of the S2 formulation with virgin 6.3mm rock salt in order to assess whether the addition of Safecote to rock salt enhances the spreading performance and whether it improves the distribution of rock salt into the desired target spread area.

Spreading trials of the S2 formulation compared with virgin 6.3mm rock salt were undertaken using a Foden dual spinner spreader at a research track. The experiment comprised eight runs at 50km/h along a simulated 3-lane motorway in accordance with BS 1622 (British Standards Institution, 1989). This combination was designed to deliver salt to three lanes and the hard shoulder. The S2 formulation (ratio of 22.2 litres per tonne of rock salt) was applied at spread rates of 10g/m² and 20g/m².

The mean results of the 10g/m² spread showed that more salt was spread into the target zone with the S2 formulation than with rock salt. The target spread was achieved in most of the hard shoulder, lanes 1 and 2 and the nearside of lane 3. Under spreading occurred in lane 3 although this was also true for rock salt. Over spreading beyond the target zone also occurred but this was less for the S2 formulation than the rock salt suggesting that the addition of Safecote to rock salt gives improved salt control.

The mean results of the 20g/m² spread indicated that the S2 formulation gave similar improved performance in the target area.

Dry spreading normally results in longitudinal snaking effects with non-uniform spread patterns whereas pre-wetted salt spreading normally tends to reduce this effect. The addition of the S2 formulation to the rock salt also reduced the longitudinal snaking effect.

### 3.7 SHRP Tests - Ice Melt, Ice Penetration and Ice Undercutting

The S2 formulation was tested against the UK Strategic Highway Research Program (SHRP) methods for evaluating chemical and solid de-icers (SHRP, 1992). The S2 formulation was dissolved in demineralised water to give a 25 per cent solution by weight. For comparison, the same tests were also carried out on 25 per cent solution of dry rock salt. The following SHRP set of tests were specified for the S2 formulation and rock salt: SHRP H-205.1 Test method for ice melting of solid de-icing chemicals
SHRP H-205.3 Test method for ice penetration of solid deicing chemicals
SHRP H-205.5 Test method for ice undercutting by solid deicing chemicals

The results of the tests have showed that similar properties are demonstrated by both products in an initial 30 minute period during the ice melt and ice penetration processes for the solutions tested at the test temperatures of -2 °C, -6 °C and -10 °C. However, the S2 formulation was slightly more effective than salt over the one-hour test period.

The S2 formulation was also slightly more effective in the ice undercutting process at test temperatures of -2 °C, -6 °C and -10 °C than rock salt for the solution concentrations tested.

### 4 Conclusions

With its good corrosion inhibitor properties, its non-stripping properties of binders from asphalt surfacings, and its reduced concrete spalling to structures compared to rock salt, Safecote can be used as a pre-wetting agent for wetted salt treatments. This would reduce the adverse effects on the environment and transport structures and the quantity of salt used.

## Claims

1. A blended composition for the prevention, reduction and/or remediation of the formation or accumulation of ice and/or snow on a surface or on an object, the composition having 5-50% by weight of one or more low molecular weight carbohydrates, the composition comprising two or more co-products of cereal, starch, syrup, sugar and/or carbohydrate production, a proportion of each co-product being selected to provide the composition having the components by weight:
| | | |
|---|---|---|
| Moisture | | 35-50% |
| Monosaccharides | | 2-10% |
| Disaccharides | | 1-15% |
| Other Carbohydrates and Polysaccharides | | 1-10% |
| Amino acid carbohydrates complexes | | 1-10% |
| Amino Acids | | 1-5% |
| Other Nitrogenous compounds | | 10-20% |
| Organic acids | | 1-10% |
| Total Mineral salts | | 5-25% |
| Including: | Potassium | 2-10% |
| | Calcium | 1-5% |
| | Sodium | 0.1-0.5% |
| | Magnesium | 0.1-3.0% |
| | Chloride | 0.1-3.0% |
| | Sulphate | 1-5%. |

2. A composition as claimed in Claim 1 wherein the carbohydrates are one or more of a co-product of the refining of sugar beet or sugar cane, or from starch or carbohydrate syrup production, or from co-products from the subsequent processing or fermentation of starch, sugar or other carbohydrate co-products.

3. A composition as claimed in any one of the preceding Claims wherein the carbohydrates and other organic compounds (and naturally included soluble mineral salts) in the compositions provide a total soluble solids content in the range 45-80%.

4. A composition as claimed in Claim 3 wherein the carbohydrates and other organic compounds (and naturally included soluble mineral salts) in the compositions provide a total soluble solids content in the range 50-70%, preferably 55- 65%, even more preferably 60-62%.

5. A composition as claimed in any one of the preceding Claims wherein the composition is admixed with 2-95% by weight or volume of one or more minerals or mineral salts.

6. A composition as claimed in Claim 5 wherein the mineral or minerals are one or more natural mineral salts.

7. A composition as claimed in Claim 5 or Claim 6 wherein the mineral or minerals are one of more of the group comprising: sodium, calcium, magnesium and potassium acetate, chloride, carbonate and formate salts, ethylene glycol and di-ethylene glycol.

8. A composition as claimed in Claim 7 wherein the mineral is sodium, calcium or magnesium chloride.

9. A composition as claimed in any one of the preceding Claims wherein the composition includes
| | |
|---|---|
| Total sugars as Invert (TSAI) | min 12% |
| Total mineral salts | min 25% |
| Total Chloride | max 2% |
| Total organic matter | min 10% |

10. A composition as claimed in any one of the preceding Claims having an anti-corrosive ability.

11. A composition as claimed in any one of the preceding Claims wherein the composition includes a mineral substance having 2 or 3 or more dissociated ions capable of lowering the freezing point of ice and/or snow.

12. A composition as claimed in any one of the preceding Claims wherein the composition includes water.

13. A composition as claimed in any one of the preceding Claims wherein the composition is admixed with one or more anti-skid agents such as sand, gravel, cinders, limestone aggregate, fly ash, river rock and mixtures thereof.

14. A composition as claimed in any one of the preceding Claims wherein the surface is a vehicular surface.

15. A composition as claimed in any one of the preceding Claims wherein the composition comprises:
| | |
|---|---|
| Moisture | 39% |
| Monosaccharides | 5% |
| Disaccharides | 7% |
| Other Carbohydrates and Polysaccharides | 4% |
| Amino acid carbohydrates complexes | 5% |
| Amino acids | 3% |
| Other Nitrogenous compounds | 13% |
| Organic acids | 3% |
| Total Mineral salts | 20% |
| Including: | |
| Potassium | 6% |
| Calcium | 4% |
| Sodium | 0.5% |
| Magnesium | 0.3% |
| Chloride | 1.4% |
| Sulphate | 3% |

16. A composition as claimed in any one of the preceding Claims wherein the composition is admixed with a liquid chloride at 50% by volume.

17. A composition as defined in any one of the preceding Claims wherein the composition is admixed with sodium chloride at a ratio of approximately 22 to 33 litres per 1000kg of sodium chloride.

18. A method of formulating and blending a composition as claimed in anyone of the preceding claims, wherein two or more co-products of cereal, starch, syrup, sugar and /or carbohydrate production are provided, and a proportion of each co-product is selected to provide the composition.

19. A method as claimed in Claim 18 wherein the composition blended is achieved using iterative calculation formulation software.

20. A method of preventing, reducing and/or remediating the formation and/or accumulation of ice and/or snow on a surface or an object, comprising applying to said surface or object a composition as claimed in any one of Claims 1 to 17.

## Patentansprüche

1. Eine gemischte Zusammensetzung zur Prävention, Reduktion und/oder Beseitigung der Bildung oder Ansammlung von Eis und/oder Schnee auf einer Oberfläche oder auf einem Gegenstand, wobei die Zusammensetzung 5-50 Gew.-% ein oder mehrere Kohlenhydrate mit niedrigem Molekulargewicht aufweist, wobei die Zusammensetzung zwei oder mehrere Nebenprodukte der Getreide-, Stärke-, Sirup-, Zucker- und/oder Kohlenhydratproduktion beinhaltet, wobei ein Anteil von jedem Nebenprodukt ausgewählt wird, um die Zusammensetzung mit den folgenden Komponenten nach Gewicht bereitzustellen:
| | | |
|---|---|---|
| Feuchtigkeit | | 35-50 % |
| Monosaccharide | | 2-10 % |
| Disaccharide | | 1-15 % |
| Sonstige Kohlenhydrate und Polysaccharide | | 1-10 % |
| Aminosäure-Kohlenhydratkomplexe | | 1-10 % |
| Aminosäuren | | 1-5 % |
| Sonstige Stickstoffverbindungen | | 10-20 % |
| Organische Säuren | | 1-10 % |
| Mineralsalze insgesamt | | 5-25 % |
| Einschließlich: | Kalium | 2-10 % |
| | Calcium | 1-5 % |
| | Natrium | 0,1-0,5 % |
| | Magnesium | 0,1-3,0 % |
| | Chlorid | 0,1-3,0 % |
| | Sulfat | 1-5 %. |

2. Zusammensetzung gemäß Anspruch 1, wobei die Kohlenhydrate eines oder mehrere von einem Nebenprodukt des Raffinierens von Zuckerrüben oder Zuckerrohr, oder von der Stärke- oder Kohlenhydratsirupproduktion, oder von Nebenprodukten des nachfolgenden Verarbeitens oder Fermentierens von Stärke, Zucker oder anderen Kohlenhydratnebenprodukten sind.

3. Zusammensetzung gemäß einem der vorhergehenden Ansprüche, wobei die Kohlenhydrate und anderen organischen Verbindungen (und natürlich enthaltenen löslichen Mineralsalze) in den Zusammensetzungen einen Gesamtgehalt an festen Bestandteilen im Bereich von 45-80 % ausmachen.

4. Zusammensetzung gemäß Anspruch 3, wobei die Kohlenhydrate und anderen organischen Verbindungen (und natürlich enthaltenen löslichen Mineralsalze) in den Zusammensetzungen einen Gesamtgehalt an festen Bestandteilen im Bereich von 50-70 %, bevorzugt 55-65 %, noch mehr bevorzugt 60-62 % ausmachen.

5. Zusammensetzung gemäß einem der vorhergehenden Ansprüche, wobei die Zusammensetzung mit 2-95 Gew-% oder Vol.-% von einem oder mehreren Mineralien oder Mineralsalzen vermischt wird.

6. Zusammensetzung gemäß Anspruch 5, wobei das Mineral oder die Mineralien eines oder mehrere natürliche Mineralsalze ist/sind.

7. Zusammensetzung gemäß Anspruch 5 oder Anspruch 6, wobei das Mineral oder die Mineralien eines oder mehrere der Gruppe sind, bestehend aus: Natrium-, Calcium-, Magnesium- und Kaliumacetat, Chlorid-, Carbonat- und Formiatsalzen, Ethylenglycol und Diethylenglycol.

8. Zusammensetzung gemäß Anspruch 7, wobei das Mineral Natrium-, Calcium- oder Magnesiumchlorid ist.

9. Zusammensetzung gemäß einem der vorhergehenden Ansprüche, wobei die Zusammensetzung Folgendes einschließt:
| | |
|---|---|
| Gesamtzucker als Invert (TSAI) | min. 12 % |
| Mineralsalze insgesamt | min. 25 % |
| Chlorid insgesamt | max. 2 % |
| Organische Stoffe insgesamt | min. 10 % |

10. Zusammensetzung gemäß einem der vorhergehenden Ansprüche, die eine Korrosionsschutzfähigkeit aufweist.

11. Zusammensetzung gemäß einem der vorhergehenden Ansprüche, wobei die Zusammensetzung einen Mineralstoff mit 2 oder 3 oder mehr dissoziierten Ionen, die den Gefrierpunkt von Eis und/oder Schnee senken können, einschließt.

12. Zusammensetzung gemäß einem der vorhergehenden Ansprüche, wobei die Zusammensetzung Wasser einschließt.

13. Zusammensetzung gemäß einem der vorhergehenden Ansprüche, wobei die Zusammensetzung mit einem oder mehreren Gleitschutzmitteln wie etwa Sand, Kies, Schlacke, Kalksteinaggregat, Flugasche, Flussgestein und Mischungen davon vermischt ist.

14. Zusammensetzung gemäß einem der vorhergehenden Ansprüche, wobei die Oberfläche eine Fahrzeugoberfläche ist.

15. Zusammensetzung gemäß einem der vorhergehenden Ansprüche, wobei die Zusammensetzung Folgendes beinhaltet:
| | |
|---|---|
| Feuchtigkeit | 39 % |
| Monosaccharide | 5 % |
| Disaccharide | 7 % |
| Sonstige Kohlenhydrate und Polysaccharide | 4 % |
| Aminosäure-Kohlenhydratkomplexe | 5 % |
| Aminosäuren | 3 % |
| Sonstige Stickstoffverbindungen | 13 % |
| Organische Säuren | 3 % |
| Mineralsalze insgesamt | 20 % |
| Einschließlich: | |
| Kalium | 6 % |
| Calcium | 4 % |
| Natrium | 0,5 % |
| Magnesium | 0,3 % |
| Chlorid | 1,4 % |
| Sulphat | 3 % |

16. Zusammensetzung gemäß einem der vorhergehenden Ansprüche, wobei die Zusammensetzung mit einem flüssigen Chlorid bei 50 Vol.-% vermischt wird.

17. Zusammensetzung gemäß einem der vorhergehenden Ansprüche, wobei die Zusammensetzung mit Natriumchlorid in einem Verhältnis von ungefähr 22 bis 33 Litern pro 1 000 kg Natriumchlorid vermischt wird.

18. Ein Verfahren zum Formulieren und Mischen einer Zusammensetzung gemäß einem der vorhergehenden Ansprüche, wobei zwei oder mehrere Nebenprodukte der Getreide-, Stärke-, Sirup-, Zucker- und/oder Kohlenhydratproduktion bereitgestellt werden und ein Anteil von jedem Nebenprodukt ausgewählt wird, um die Zusammensetzung bereitzustellen.

19. Verfahren gemäß Anspruch 18, wobei die gemischte Zusammensetzung unter Verwendung von iterativer Berechnungsformulierungssoftware erreicht wird.

20. Ein Verfahren zur Prävention, Reduktion und/oder Beseitigung der Bildung und/oder Ansammlung von Eis und/oder Schnee auf einer Oberfläche oder auf einem Gegenstand, beinhaltend das Auftragen einer Zusammensetzung gemäß einem der Ansprüche 1 bis 17 auf die Oberfläche oder auf den Gegenstand.

## Revendications

1. Une composition mélangée de façon homogène pour la prévention, la réduction et/ou la remédiation de la formation ou de l'accumulation de givre et/ou de neige sur une surface ou sur un objet, la composition ayant de 5 à 50 % en poids d'un ou de plusieurs hydrates de carbone de faible masse moléculaire, la composition comprenant deux coproduits ou plus de la production de céréales, d'amidon, de sirop, de sucre et/ou d'hydrates de carbone, une proportion de chaque coproduit étant sélectionnée pour fournir la composition ayant les composants en poids :
| | | |
|---|---|---|
| Humidité | | de 35 à 50 % |
| Monosaccharides | | de 2 à 10 % |
| Disaccharides | | de 1 à 15 % |
| Autres hydrates de carbone et polysaccharides | | de 1 à 10 % |
| Complexes d'hydrates de carbone d'acides aminés | | de 1 à 10 % |
| Acides aminés | | de 1 à 5 % |
| Autres composés azotés | | de 10 à 20 % |
| Acides organiques | | de 1 à 10 % |
| Sels minéraux totaux | | de 5 à 25 % |
| Y compris : | Potassium | de 2 à 10 % |
| | Calcium | de1 à 5 % |
| | Sodium | de 0,1 à 0,5 % |
| | Magnésium | de 0,1 à 3,0 % |
| | Chlorure | de 0,1 à 3,0 % |
| | Sulfate | de 1 à 5 %. |

2. Une composition telle que revendiquée dans la revendication 1 dans laquelle les hydrates de carbone sont un ou plusieurs éléments parmi un coproduit du raffinage de betterave sucrière ou de canne à sucre, ou de la production d'amidon ou de sirop d'hydrate de carbone, ou de coproduits du traitement ou de la fermentation subséquents d'amidon, de sucre ou d'autres coproduits d'hydrates de carbone.

3. Une composition telle que revendiquée dans n'importe laquelle des revendications précédentes dans laquelle les hydrates de carbone et autres composés organiques (et y compris naturellement les sels minéraux solubles) dans les compositions fournissent une teneur en solides solubles totale comprise dans la gamme allant de 45 à 80 %.

4. Une composition telle que revendiquée dans la revendication 3 dans laquelle les hydrates de carbone et autres composés organiques (et y compris naturellement les sels minéraux solubles) dans les compositions fournissent une teneur en solides solubles totale comprise dans la gamme allant de 50 à 70 %, préférablement de 55 à 65 %, encore plus préférablement de 60 à 62 %.

5. Une composition telle que revendiquée dans n'importe laquelle des revendications précédentes dans laquelle la composition est mélangée avec de 2 à 95 % en poids ou volume d'un ou de plusieurs minéraux ou sels minéraux.

6. Une composition telle que revendiquée dans la revendication 5 dans laquelle le minéral ou les minéraux sont un ou plusieurs sels minéraux naturels.

7. Une composition telle que revendiquée dans la revendication 5 ou la revendication 6 dans laquelle le minéral ou les minéraux sont un ou plusieurs dans le groupe comprenant : acétate de sodium, calcium, magnésium et potassium, chlorure, sels de carbonate et formate, éthylène glycol et di-éthylène glycol.

8. Une composition telle que revendiquée dans la revendication 7 dans laquelle le minéral est un chlorure de sodium, calcium ou magnésium.

9. Une composition telle que revendiquée dans n'importe laquelle des revendications précédentes dans laquelle la composition inclut
| | |
|---|---|
| Sucres totaux en tant que sucre inverti (TSAI) | min. 12 % |
| Sels minéraux totaux | min. 25 % |
| Chlorure total | max. 2 % |
| Matière organique totale | min. 10 % |

10. Une composition telle que revendiquée dans n'importe laquelle des revendications précédentes ayant une capacité anticorrosive.

11. Une composition telle que revendiquée dans n'importe laquelle des revendications précédentes dans laquelle la composition inclut une substance minérale ayant 2 ou 3 ions dissociés ou plus capables d'abaisser le point de congélation du givre et/ou de la neige.

12. Une composition telle que revendiquée dans n'importe laquelle des revendications précédentes dans laquelle la composition inclut de l'eau.

13. Une composition telle que revendiquée dans n'importe laquelle des revendications précédentes dans laquelle la composition est mélangée avec un ou plusieurs agents antipatinages tels que du sable, du gravier, des cendres, de l'agrégat de pierre à chaux, des cendres volantes, de la roche de rivière et des mélanges de ceux-ci.

14. Une composition telle que revendiquée dans n'importe laquelle des revendications précédentes dans laquelle la surface est une surface de véhicule.

15. Une composition telle que revendiquée dans n'importe laquelle des revendications précédentes dans laquelle la composition comprend :
| | |
|---|---|
| Humidité | 39 % |
| Monosaccharides | 5 % |
| Disaccharides | 7 % |
| Autres hydrates de carbone et polysaccharides | 4 % |
| Complexes d'hydrates de carbone d'acides aminés | 5 % |
| Acides aminés | 3 % |
| Autres composés azotés | 13 % |
| Acides organiques | 3 % |
| Sels minéraux totaux | 20 % |
| Y compris : | |
| Potassium | 6 % |
| Calcium | 4 % |
| Sodium | 0,5 % |
| Magnésium | 0,3 % |
| Chlorure | 1,4 % |
| Sulfate | 3 % |

16. Une composition telle que revendiquée dans n'importe laquelle des revendications précédentes dans laquelle la composition est mélangée avec un chlorure liquide à 50 % en volume.

17. Une composition telle que définie dans n'importe laquelle des revendications précédentes dans laquelle la composition est mélangé avec du chlorure de sodium à un rapport d'approximativement 22 à 33 litres pour 1 000 kg de chlorure de sodium.

18. Une méthode pour formuler et mélanger de façon homogène une composition telle que revendiquée dans n'importe laquelle des revendications précédentes, dans laquelle deux coproduits ou plus de production de céréales, d'amidon, de sirop, de sucre et/ou d'hydrates de carbone sont fournis, et une proportion de chaque coproduit est sélectionnée pour fournir la composition.

19. Une méthode telle que revendiquée dans la revendication 18 dans laquelle la composition mélangée de façon homogène est obtenue en utilisant un logiciel de formulation de calculs par itérations.

20. Une méthode pour empêcher, réduire et/ou remédier à la formation et/ou l'accumulation de givre et/ou de neige sur une surface ou un objet, comprenant le fait d'appliquer sur ladite surface ou ledit objet une composition telle que revendiquée dans n'importe laquelle des revendications 1 à 17.
